**Europäisches Patentamt**

**European Patent Office**

**Office européen des brevets**

(19)

(11) Veröffentlichungsnummer : **0 341 474 B1**

(12) **EUROPÄISCHE PATENTSCHRIFT**

(45) Veröffentlichungstag der Patentschrift :
**27.11.91 Patentblatt 91/48**

(51) Int. Cl.⁵ : **F16H 9/18, F16H 55/52**

(21) Anmeldenummer : **89107325.6**

(22) Anmeldetag : **22.04.89**

(54) **Stufenlos regelbares Kegelscheiben-Umschlingungsgetriebe, insbesondere für Kraftfahrzeuge.**

(30) Priorität : **13.05.88 DE 3816357**

(43) Veröffentlichungstag der Anmeldung :
**15.11.89 Patentblatt 89/46**

(45) Bekanntmachung des Hinweises auf die
Patenterteilung :
**27.11.91 Patentblatt 91/48**

(84) Benannte Vertragsstaaten :
**DE FR GB IT SE**

(56) Entgegenhaltungen :
**DE-A- 1 576 358**
**DE-A- 2 210 132**
**DE-A- 2 948 195**
**DE-A- 3 117 657**
**DE-A- 3 147 693**
**DE-A- 3 241 789**
**DE-B- 2 012 732**
**GB-A- 1 200 668**
**US-A- 3 628 389**

(73) Patentinhaber : **FORD-WERKE
AKTIENGESELLSCHAFT
Werk Köln-Niehl Henry-Ford-Strasse Postfach
60 40 02
W-5000 Köln 60 (DE)**
(84) Benannte Vertragsstaaten :
**DE IT SE**
Patentinhaber : **FORD MOTOR COMPANY
LIMITED
Eagle Way
Brentwood Essex CM13 3BW (GB)**
(84) Benannte Vertragsstaaten :
**GB**
Patentinhaber : **FORD FRANCE SOCIETE
ANONYME
344 Avenue Napoléon Bonaparte B.P. 307
F-92506 Rueil Malmaison Cedex (FR)**
(84) Benannte Vertragsstaaten :
**FR**

(72) Erfinder : **Fuss, Josef
Herderstrasse 9
W-5013 Elsdorf (DE)**
Erfinder : **Adams, Gerd
Förster-Sons-Strasse 18
W-5653 Leichlingen (DE)**

(74) Vertreter : **Ritzkowsky, Harald, Dipl.-Ing.
Ford-Werke Aktiengesellschaft
Patentabteilung NH/DRP Henry-Ford-Strasse
W-5000 Köln 60 (DE)**

## Beschreibung

Die Erfindung bezieht sich auf ein stufenlos regelbares Kegelscheiben-Umschlingungsgetriebe, insbesondere für Kraftfahrzeuge, der im Oberbegriff des Patentanspruches 1 erläuterten Art.

Aus der GB-A 1.200.668 ist ein derartiges stufenlos regelbares Kegelscheiben-Umschlingungsgetriebe, insbesondere für Kraftfahrzeuge bekannt, bestehend aus einer Primärwelle mit einem ersten feststehenden Kegelscheibenteil und einem zweiten axial verschiebbaren Kegelscheibenteil und einer über ein Umschlingungsband treibend verbundenen Sekundärwelle, bestehend aus einem ersten feststehenden Kegelscheibenteil und einem axial verschiebbaren Kegelscheibenteil, wobei den beweglichen Kegelscheibenteilen Zylindermäntel zugeordnet sind, die mit an den entsprechenden Wellen festgelegten Kolbenscheiben Druckmittelservos zur hydraulischen Verstellung der beweglichen Kegelscheiben bilden in denen jeweils eine, eine Mindestvorspannung auf das Umschlingungsband aufbringende, Federanordnung untergebracht ist.

Bei dem bekannten Kegelscheiben-Umschlingungsgetriebe ist als Federanordnung jeweils eine großformatige Schraubendruckfeder vorgesehen.

Aus der DE-A 2948195 ist ein ähnliches stufenlos regelbares Kegelscheiben-Umschlingungsgetriebe, insbesondere für Kraftfahrzeuge bekannt, bei dem die in den Druckmittelservos vorgesehene Federanordnung durch jeweils eine großflächige Tellerfeder gebildet ist.

Die bekannten stufenlos regelbaren Kegelscheiben-Umschlingungsgetriebe mit einer in den Druckmittelservos angeordneten Federanordnung zeichnen sich dadurch aus, daß die erzielbaren axialen Hübe aufgrund des geringen Federweges einer Tellerfeder nur sehr klein sein können. Dies hat zur Folge, daß der Regelbereich des Umschlingungsgetriebes klein gehalten werden muß. Bei der Anordnung einer großformatigen Schraubendruckfeder ist die erzielbare Mindestvorspannung zu gering um z.B. ein Anschleppen eines Kraftfahrzeuges mit einem stufenlos regelbaren Kegelscheiben-Umschlingungsgegetriebe zu ermöglichen.

Aus der DE-A 3117657 ist ein stufenlos regelbares Kegelscheiben-Umschlingungsgetriebe, insbesondere für Kraftfahrzeuge bekannt, wie es z.Z. in ähnlicher Ausführung bereits im Großserieneinsatz ist. Hierbei wird normalerweise nur im Druckmittelservo an der Sekundärwelle eine Federanordnung vorgesehen, wohingegen im Druckmittelservo der Primärwelle keine Federanordnung vorhanden ist. Der Grund für eine solche Anordnung liegt darin, daß, würden in beiden Druckmittelservos entsprechende Federanordnungen vorgesehen werden, die Montage des Umschlingungsbandes sowie des das Eingangsglied bildenden Sonnenrades unter den Gesichtspunkten einer Großserienfertigung unmöglich würde.

Die Aufgabe der Erfindung ist es, ein stufenlos regelbares Kegelscheiben-Umschlingungsgetriebe, insbesondere für Kraftfahrzeuge der im Oberbegriff des Patentanspruches 1 erläuterten Art derart weiter zu bilden, daß sowohl in dem Druckmittelservo für die Primärwelle als auch im Druckmittelservo für die Sekundärwelle Federanordnungen vorgesehen werden, die eine so hohe Vorspannung aufbringen können, daß ein Anschleppen des Kraftfahrzeuges bei stillstehendem Motor und dementsprechend fehlendem Druckmittel möglich ist, wobei Vorkehrungen getroffen sind, daß die Federanordnungen die Montage des Getriebes und die Montage des Umschlingungsbandes nicht erschweren sondern sogar erleichtern.

Diese Aufgabe wird gemäß der Erfindung gelöst, indem ein stufenlos regelbares Kegelscheiben-Umschlingungsgetriebe, insbesondere für Kraftfahrzeuge, der im Oberbegriff des Patentanspruches 1 erläuterten Art, die im Kennzeichenteil des Patentanspruches aufgezeigten Merkmale aufweist.

Die Federanordnungen bestehen je aus einer Vielzahl von kleinformatigen Schraubendruckfedern, die in einer Anordnung mit Federaufnahmeringen, einem topfartigen Federaufnahmen aufweisenden, kolbenseitigen Abstützring und einem zapfenförmige Federführungen aufweisenden, zylinderseitigen Führungsring, wobei den Ringen Halteelemente und mit diesen zusammen arbeitende Ver- und Entriegelungsbolzen zugeordnet sind, in verspannter Montagelage in die Druckmittelservos eingelegt werden. Die Verspannung der Schraubendruckfedern wird bei der ersten vollen axialen Scheibenbewegung durch entsprechend ausgebildete Ver- und Entriegelungsbolzen aus der Montagelage freigegeben. Dieses bewirkt, daß die gewünschte hohe Mindestvorspannung bereitgestellt wird, ohne daß hierdurch die Montage des Getriebes und des Umschlingungsbandes sowie des Sonnenrades erschwert wird.

Aufgrund der gewählten Federn wird auch ein akzeptabler axialer Hub erreicht, was zur Folge hat, daß der vorgesehene Regelbereich nicht eingeschränkt zu werden braucht.

In den Ansprüchen 2 und 3 sind zweckmäßige Ausführungsformen der Ver- und Entriegelungsanordnungen erläutert.

Die Erfindung wird anhand eines Ausführungsbeispieles näher erläutert. Es zeigt:

Fig. 1    Einen Längsschnitt durch ein stufenlos regelbares Kegelscheiben-Umschlingungsgetriebe einer z.B. aus dem deutschen Patent DE-A-3241789 bekannten Bauart mit den erfindungsgemäßen Federanordnungen in den Druckmittelservos ;

2

Fig. 2    einen Teilschnitt durch die Kegelscheibenanordnung und das Druckmittelservo der Primärwelle, aus dessen oberem Teil eine der verspannten Schraubendruckfedern in der Montagelage und aus dessen unteren Teil mit einem Halteelement zusammenwirkende der Ver- und Entriegelungsbolzen gezeigt sind ;

Fig. 3    einen Teilschnitt durch die Kegelscheibenanordnung und das Druckmittelservo der Sekundärwelle, aus dessen oberem Teil wieder eine der verspannten Schraubendruckfedern in ihrer Mongagelage und aus dessen unteren Teil der mit einem Halteelement zusammenwirkende Ver- und Entriegelungsbolzen gezeigt sind ;

Fig. 4    eine Frontansicht der Federaufnahmeringanordnung an der Primärwelle ;

Fig. 5    einen Schnitt entlang der Linie V-V in Figur 4 ;

Fig. 6    eine Frontansicht der Federaufnahmeringanordnung für die Sekundärwelle ;

Fig. 7    einen Schnitt entlang der Linie VII-VII in Figur 6 ;

Fig. 8    eine Frontansicht des Ver- und Entriegelungsbolzens für die Federaufnahmeringe ;

Fig. 9 und 10    Seitenansichten des entsprechenden Ver- und Entriegelungsbolzens und

Fig. 11 a, b, c    eine alternative Ausführungsform für die Verriegelungsanordnung.

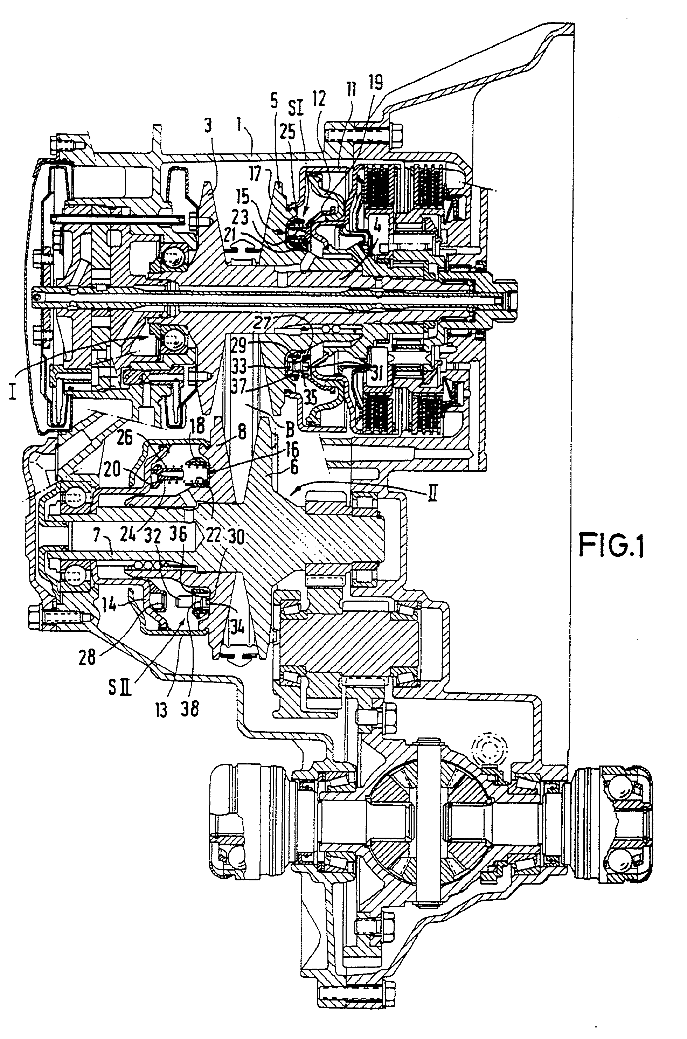

Das in Fig. 1 gezeigte stufenlos regelbare Kegelscheiben-Umschlingungsgetriebe besteht im wesentlichen aus einem Getriebegehäuse 1, in dem auf einer Primärwelle I drehfest angeordnete Kegelscheibenanordnungen über ein Umschlingungsband B treibend mit einer auf einer Sekundärwelle II drehfest angeordneten Kegelscheibenanordnung verbunden sind. Die Primärwelle I besteht hierbei im wesentlichen aus einer axial feststehenden, mit einem Wellenansatz die Primärwelle bildenden Festkegelscheibe 3 und einer auf deren Wellenansatz 4 axial verschiebbaren Stellkegelscheibe 5, die über ein Druckmittelservo SI in ihrer Axiallage veränderbar ist.

Die Sekundärwelle II besteht in ähnlicher Weise aus einer axial feststehenden, mit einem Wellenansatz die Sekundärwelle bildenden Festkegelscheibe 6, auf deren Wellenansatz 7 eine axial verstellbare Stellkegelscheibe 8 angeordnet ist, die gleichfalls über einen Druckmittelservo SII in ihrer Axiallage veränderbar ist.

Die bewegliche Kegelscheibe oder Stellkegelscheibe 5 ist mit einem Zylindermantel 11 verbunden, der mit einer am Wellenansatz 4 festgelegten Kolbenscheibe 12 das Druckmittelservo SI bildend zusammenwirkt.

Die bewegliche Kegelscheibe oder Stellkegelscheibe 8 der Sekundärwelle II ist in ähnlicher Weise mit einem Zylindermantel 13 verbunden, der mit einer auf dem Wellenansatz 7 festgelegten Kolbenscheibe 14 zusammenwirkt, um das Druckmittelservo SII zu bilden.

Im Druckmittelservo SI ist eine Federaufnahmeringanordnung 15 und im Druckmittelservo SII ist eine Federaufnahmeringanordnung 16 angeordnet.

Jede der beiden Federaufnahmeringanordnungen 15 und 16 besteht aus einem zylinderseitigen Abstützring 17 bzw. 18 und einem kolbenseitigen Führungsring 19 bzw. 20, wobei die zylinderseitigen Abstützringe 17 und 18 mit einer Vielzahl von topfartigen Federaufnahmen 21 bzw. 22 versehen sind, während die kolbenseitigen Führungsringe 19 und 20 mit einer Vielzahl von zapfenförmigen Federführungen 23 und 24 für eine Vielzahl von einzelnen Schraubendruckfedern 25 und 26 versehen sind.

Wie jeweils aus der unteren Hälfte der Schnittdarstellung zu ersehen ist, sind an z.B. drei am Umfang gleichmäßig verteilten Stellen anstelle der Federaufnahmen und Federführungen für die Schraubendruckfedern 25 und 26 Halteelemente in Form von Rastöffnungen 27 bzw. 28 und Halteöffnungen 29 bzw. 30 für Ver- und Entriegelungsbolzen 31 bzw. 32 vorgesehen.

Jeder Ver- und Entriegelungsbolzen ist an seinem einen Ende mit einem Bajonettkopf 33 bzw. 34 und etwa in seiner Mitte mit einer Haltewulst 35 bzw. 36 sowie einer weiteren Rastwulst 37 und 38 versehen.

Bei der in Figur 1 gezeigten Schnittdarstellung befinden sich beide Federaufnahmeringanordnungen bereits in ihrer Funktionsstellung, d.h. die Verspannung der Schraubendruckfedern in ihrer Montagelage ist bereits freigegeben worden. Die Primärwelle I weist hierbei eine voll geöffnete Kegelscheibenanordnung auf, während die Sekundärwelle II eine Kegelscheibenanordnung in Endlage (fast geschlossen) darstellt.

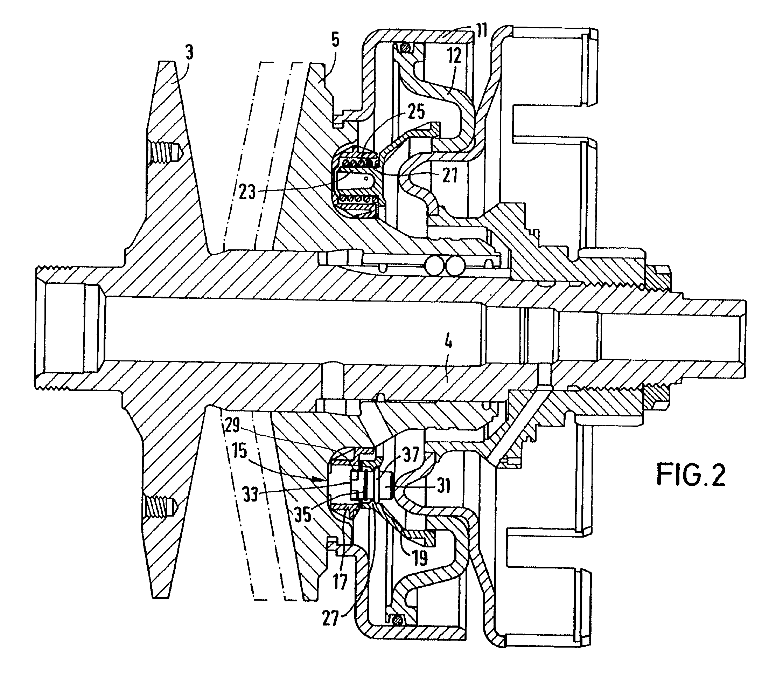

Bei der in Figur 2 gezeigten Primärwellen-Baugruppe im Montagezustand befindet sich die Stellkegelscheibe 5 auf dem Ansatz 4 der Festkegelscheibe 3 in Montagelage, d.h. die Federaufnahmeringanordnung 15 ist in verrasteter Lage ihrer beiden Ringe, dem Abstützring 17 und dem Führungsring 19 eingesetzt. Der Ver- und Entriegelungsbolzen 31 hintergreift hierbei mit seiner Rastwulst 37 das Halteelement in Form der Rastöffnung 27 im Führungsring 19 und hält hierdurch die vorgespannten Schraubendruckfedern 25 nahezu in ihrer Blocklänge.

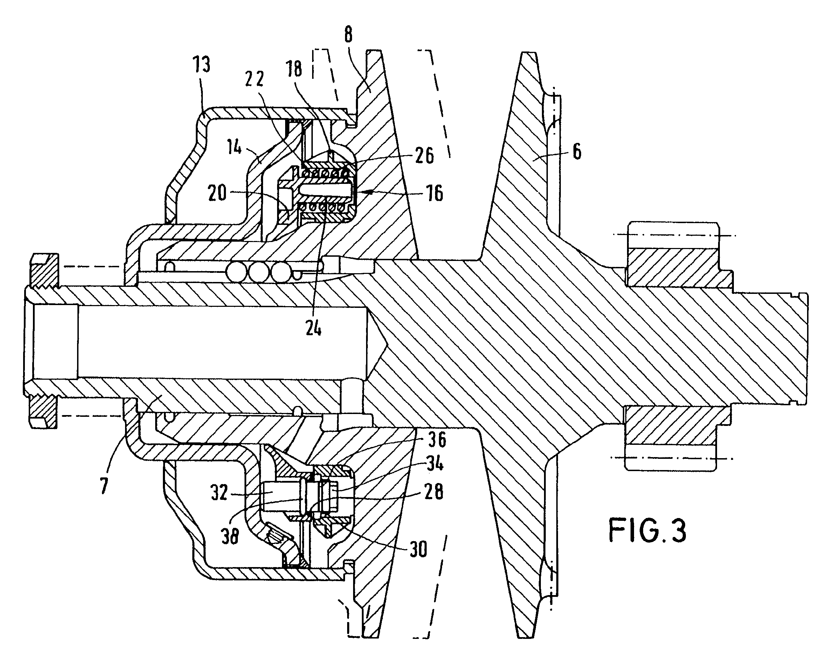

Bei der in Figur 3 gezeigten Sekundärwellen-Baugruppe befindet sich die Stellkegelscheibe 8 in Montagelage auf dem Ansatz 7 der Festkegelscheibe 6 und die Federaufnahme-Ringanordnung 16 ist in ihrem verspannten Montagezustand eingelegt. Der Ver- und Entriegelungsbolzen 32 hintergreift hierbei mit seiner Rastwulst 38 das Halteelement in Form der Rastöffnung 28 und hält die Vielzahl von Schraubendruckfedern 26 nahezu in ihrer Blocklänge.

Wird nun das fertig montierte stufenlos regelbare Kegelscheiben-Umschlingungsgetriebe zum ersten Mal in Betrieb genommen, so durchläuft jede der beiden Kegelscheibenanordnungen auf der Primär- als auch auf der Sekundärwelle ihre Minimal- und Maximallagen, und bei jeweils der maximalen Öffnungslage der Kegelscheibenanordnungen trifft der Ver- und Entriegelungsbolzen 31 bzw. 32 auf den feststehenden Kolbenscheibe 12 bzw. 14 und wird hierdurch zwangsweise durch die Rastöffnung 27 bzw. 28 hindurchgepreßt und gelangt dann mit seiner Haltewulst 35 bzw. 36 in die entsprechenden Halteöffnung 29 bzw. 30. Dadurch können die Schraubendruckfedern 25 und 26 ihre volle Kraft entfalten und das Getriebe ist funktionsfähig.

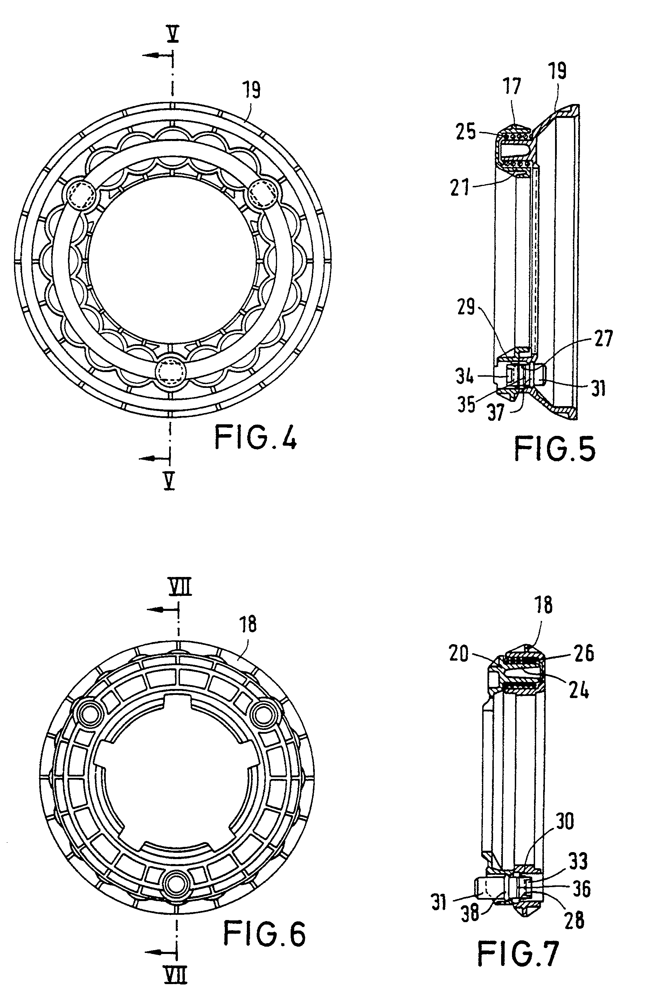

In den Figuren 4 und 5 bzw. 6 und 7 sind weitere Details der beiden Federaufnahmering-Anordnungen 15 und 16 gezeigt.

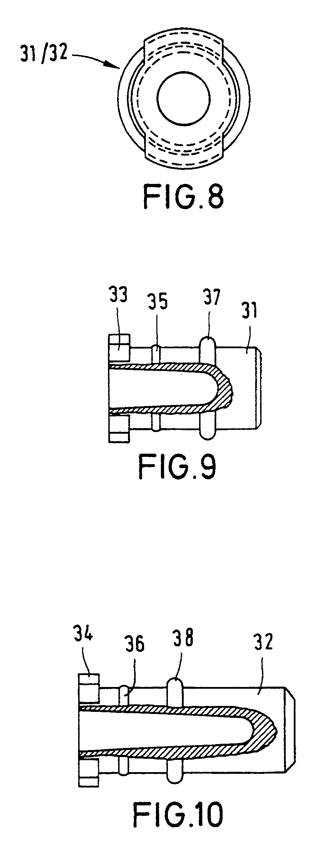

Ebenso ist in den Figuren 8, 9 und 10 der Aufbau des Ver- und Entriegelungsbolzens in größerer Darstellung ersichtlich.

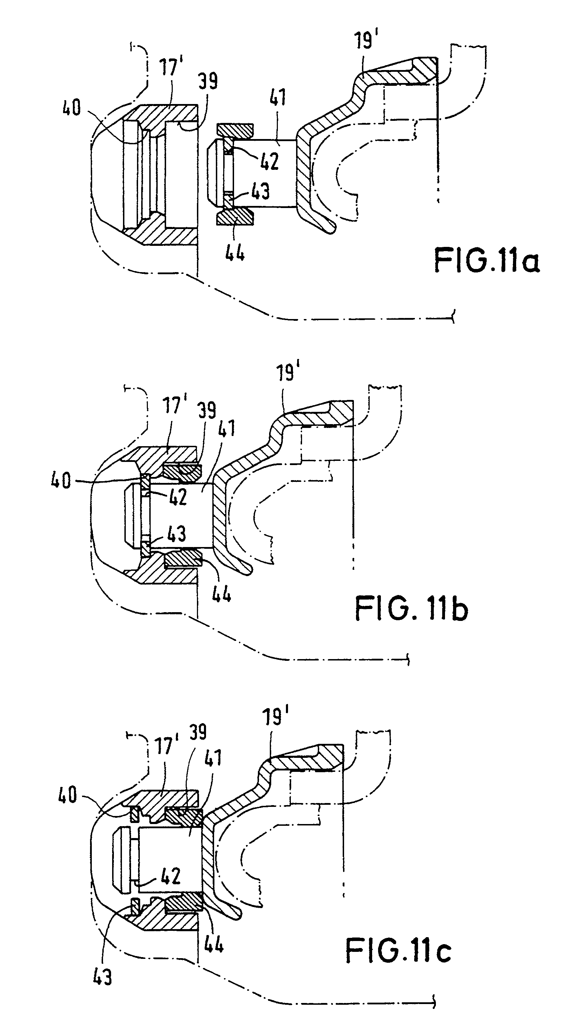

In den Fig. 11a-11c ist eine alternative Ausführungsform der Verriegelungsanordnung gezeigt. An einem zylinderseitigen Abstützring 17′ sind Halte- und Rastöffnungen 39 und 40 vorgesehen. An einem kolbenseitigen Führungsring 19′ sind Verriegelungsbolzen 41 angeformt, an denen als Halteelemente in Ringnuten 42 nach außen federnde Sprengringe 43 über Hülsen 44 in verspannter Lage gehalten sind. Zur Erreichung der verrasteten Montagelage des Abstützringes 17′ mit dem Führungsring 19′, werden die Verriegelungsbolzen 41 so weit in die Halteöffnungen 39 eingeschoben, daß die Sprengringe 43 in die hinteren Rastöffnungen 40 einrasten und so die Verriegelungsbolzen 41 an den Abstützringen 17′ festlegen können. Nach erfolgter Montage des Getriebes werden die Verriegelungsbolzen 41 weiter gedrückt, bis sich die Sprengringe 43 nach außen entspannen können und die Verriegelungsbolzen 41 freigeben. Die Schraubenfederanordnung wird hierdurch betriebsbereit.

Beim Abschleppen des Fahrzeuges, also im Betrieb ohne Druckmittelversorgung in den Servos, bringen die Federn das Band und somit das Getriebe in die Übersetzung 1 : 1. Dies führt dazu, kein Verschleiß am Schubgliederband sowie den Kegelscheiben entsteht, da das Schubgliederband auf beiden Kegelscheiben mit einer großen aktiven Umschlingung läuft, eine relativ hohe Anpreßkraft des Bandes gewährleistet ist und die Primärkegelscheibe auch nicht mit hoher Drehzahl läuft.

## Patentansprüche

1. Stufenlos regelbares Kegelscheiben-Umschlingungsgetriebe, insbesondere für Kraftfahrzeuge mit einer Primärwelle, bestehend aus einem ersten Kegelscheibenteil, der eine feststehende Kegelscheibe (3) und einen Wellenabschnitt (4) bildet, und einem zweiten Kegelscheibenteil, der auf dem Wellenabschnitt axial verschiebbar aber drehfest angeordnet ist und eine bewegliche Kegelscheibe (5) bildet und einer über ein Umschlingungsband treibend verbundenen Sekundärwelle, bestehend aus einem ersten Kegelscheibenteil, der eine feststehende Kegelscheibe (6) und einen Wellenabschnitt (7) bildet und einem zweiten Kegelscheibenteil, der auf dem Wellenabschnitt axial verschiebbar aber drehfest angeordnet ist und eine bewegliche Kegelscheibe (8) bildet, wobei an den beweglichen Kegelscheiben Zylindermäntel (11, 13) befestigt sind und an den Wellenabschnitten festgelegte Kolbenscheiben (12, 14) vorgesehen sind, die Druckmittelservos zur hydraulischen Verstellung der beweglichen Kegelscheiben bilden und in denen jeweils eine Mindestvorspannung auf das Umschlingungsband aufbringende Federanordnungen untergebracht sind, **dadurch gekennzeichnet,** daß die Federanordnungen aus einer Vielzahl von Schraubendruckfedern (25 und 26) bestehen, die in Federaufnahmering-Anordnungen (15 und 16) angeordnet sind, die aus einem topfartige Federaufnahmen (21 und 22) aufweisenden, zylinderseitigen Abstützring (17 und 18) und einem zapfenförmige Federführungen (23 und 24) aufweisenden, kolbenseitigen Führungsring (19 und 20) bestehen, und daß die beiden Ringe (17 und 19 bzw. 18 und 20) mit vorgespannten Schraubendruckfedern (25 und 26) über den Ringen zugeordneten Halteelementen und mit diesen zusammenarbeitenden Ver- und Entriegelungsbolzen (31 und 32) in einer vorgespannten Montagelage gehalten werden, welche bei einer ersten vollen axialen Betätigungsbewegung der Kegelscheibenanordnung durch Überdrücken der Ver- und Entriegungsbolzen (31 und 32) über zugeordnete Halteelemente in eine Funktionslage überführt wird.

2. Stufenlos regelbares Kegelscheiben-Umschlingungsgetriebe, nach Anspruch 1, **dadurch gekennzeichnet,** daß in den Abstützringen (17 und 18) Halteelemente in Form von Halteöffnungen (29 und 30) zur Aufnahme der bajonettartigen Kopfenden (33 und 34) der Ver- und Entriegelungsbolzen (31 und 32) vorgesehen sind und daß an den Führungsringen (19 und 20) Rastöffnungen (27 und 28) vorgesehen sind, hinter die Rastwülste (37 bzw. 38) an den Ver- und Entriegelungsbolzen (31 und 32) unter Zusammendrücken der Schraubenfederanordnung einrasten, um die Vielzahl von Schraubendruckfedern (25 und 26) in der vorgespannten Montagelage zu halten, wobei nach aufgehobener Montagelage die Ver- und Entriegelungsbolzen (31 und 32) über ihre Haltewülste (35 und 36) in den Halteöffnungen (29 und 30) festgehalten werden.

3. Stufenlos regelbares Kegelscheiben-Umschlingungsgetriebe nach Anspruch 1, **dadurch gekennzeichnet**, daß am Abstützring (17') als Halteelemente Halte- und Rastöffnungen (39 bzw. 40) für Verriegelungsbolzen (41) am Führungsring (19') vorgesehen sind und an den Bolzen (41) als Halteelement ein nach außen öffnender Sprengring (43) in einer Ringnut (42) durch eine geschlitzte Hülse (44) in radial zusammengedrückter Lage festgehalten ist und unter Zusammendrückung der Schraubenfederanordnung in die Rastöffnung (40) halb entspannt einrastet, um die Vielzahl von Schraubenfedern in der vorgespannten Montagelage zu halten, wobeinach aufgehobener Montagelage der voll entspannte Sprengring (43) in einem hinteren Abschnitt der Rastöffnung (40) festgehalten wird.

## Claims

1. A continuously variable cone-pulley belt-drive transmission, in particular for motor vehicles with a primary shaft, comprising a first cone pulley part which forms a stationary cone pulley (3) and a shaft portion (4), and a second cone pulley part which is mounted axially displaceably but rotationally rigidly on the shaft portion and forms a movable cone pulley (5), and a secondary shaft connected in a driving manner by way of a circulating belt and comprising a first cone pulley part which forms a stationary cone pulley (6) and a shaft portion (7), and a second cone pulley part which is mounted axially displaceably but rotationally rigidly on the shaft portion and which forms a movable cone pulley (8), cylinder jackets (11, 13) being secured to the movable cone pulleys and piston discs (12, 14) secured on the shaft portions being provided which form pressure fluid servos for the hydraulic displacement of the movable cone pulleys and in which is provided one spring arrangement in each case which applies a minimum pretensioning to the circulating belt, characterised in that the spring arrangements comprise a plurality of helical compression springs (25 and 26) which are arranged in spring receiving ring arrangements (15 and 16) which comprise a support ring (17 and 18) comprising cup-shaped spring receiving means (21 and 22) towards the cylinder, and a guide ring (19 and 20) comprising peg-shaped spring guides (23 and 24) towards the piston, and the two rings (17 and 19, and 18 and 20 respectively) are held with pretensioned helical compression springs (25 and 26) by way of holding element associated with the rings and locking and unlocking pins (31 and 32) cooperating therewith in a pre-tensioned assembled position, which is transferred during a first complete axial actuating movement of the cone pulley arrangement by super-compressing the locking and unlocking pins (31 and 32) by way of associated holding elements into an operating position.

2. A continuously variable cone-pulley belt-drive transmission according to Claim 1, characterised in that holding elements in the form of holding openings (29 and 30) for receiving the bayonet-like head ends (33 and 34) of the locking and unlocking pins (31 and 32) are provided in the support rings (17 and 18), and catch openings (27 and 28), behind which catch beads (37 and 38 respectively) engage on the locking and unlocking pins (31 and 32) while compressing the helical spring arrangement, are provided on the guide rings (19 and 20), in order to hold the plurality of helical compression springs (25 and 26) in the pre-tensioned assembled position, the locking and unlocking pins (31 and 32) being securely held by way of their holding beads (35 and 36) in the holding openings (29 and 30) after the assembled position ceases to exist.

3. A continuously variable cone-pulley belt-drive transmission according to Claim 1, characterised in that holding and catch openings (39 and 40 respectively) for locking pins (41) on the guide ring (19') are provided as holding elements on the support ring (17'), and on the pins (41) a circlip (43) opening outwards is secured as a holding element in an annular groove (42) by a slotted sleeve (44) in a radially compressed position and engages half tensioned in the catch opening (40) as the helical spring arrangement is compressed, in order to hold the plurality of helical springs in the pre-tensioned assembled position, the fully released circlip being held securely in a rear portion of the catch opening (40) after the assembled position ceases to exist.

## Revendications

1. Transmission à enroulement et à poulies coniques à réglage continu, en particulier pour les véhicules à moteur, comprenant un arbre primaire composé d'une première partie de poulie conique qui forme une joue conique fixe (3) et une portion d'arbre (4), et d'une deuxième partie de poulie conique qui est montée sur la portion d'arbre en pouvant coulisser axialement, mais de manière solidaire en rotation, et qui forme une joue conique mobile (5), et un arbre secondaire relié en étant mené par l'intermédiaire d'une bande d'enroulement et composé d'une première partie de poulie conique qui forme une joue conique fixe (6) et une portion d'arbre (7), et d'une deuxième partie de poulie conique qui est montée sur la portion d'arbre en pouvant coulisser axialement, mais de manière solidaire en rotation, et qui forme une joue conique mobile (8), cependant que des enveloppes cylindriques (11, 13) sont fixées aux joues coniques mobiles et qu'il est prévu des pistons annulaires (12, 14) qui sont fixés aux portions d'arbres, qui constituent des servomécanismes à fluide sous pression destinés au déplacement par voie hydraulique des joues coniques mobiles et dans lesquels sont logés à chaque fois des dispositifs à ressorts imprimant une tension minimale préalable à la bande d'enroulement, caractérisée par le fait que les dispositifs à ressorts se composent d'une pluralité de ressorts de compression hélicoïdaux (25 et 26), lesquels sont disposés dans des dispositifs annulaires (15 et 16) qui servent de logements aux ressorts et qui se composent d'une couronne d'appui (17 et 18) située du côté dru cylindre et présentant des logements en forme de pot (21 et 22) pour les ressorts, et d'une couronne de guidage (19 et 20) située du côté du piston et présentant des guidages en forme de goujons (23 et 24) pour les ressorts, et par le fait que les deux couronnes (17 et 19, respectivement 18 et 20), avec les ressorts de compression hélicoïdaux (25 et 26) serrés au préalable, sont maintenues dans une position de montage à serrage préalable par l'intermédiaire d'éléments de retenue associés aux couronnes et de goujons de verrouillage et de déverrouillage (31 et 32) coopérant avec ceux-ci, position qui se transforme en une position de fonctionnement lors du premier déplacement axial d'actionnement complet du dispositif à joues coniques en poussant les goujons de verrouillage et de déverrouillage (31 et 32) sur les éléments de maintien associés.

2. Transmission à enroulement et à poulies coniques à réglage continu selon la revendication 1, caractérisée par le fait qu'il est prévu dans les couronnes d'appui (17 et 18) des éléments de retenue sous la forme d'orifices de retenue (29 et 30) destinés à recevoir les têtes à baïonnette (33 et 34) des goujons de verrouillage et de déverrouillage (31 et 32), et par le fait qu'il est prévu sur les couronnes de guidage (19 et 20) des orifices d'encliquetage (27 et 28) derrière lesquels des bourrelets d'encliquetage (37, respectivement 38) ménagés sur les goujons de verrouillage et de déverrouillage (31 et 32) s'encliquettent pendant que le dispositif à ressorts de compression est comprimé, afin de maintenir la pluralité de ressorts de compression hélicoïdaux (25 et 26) dans la position de montage à serrage préalable, cependant qu'après qu'il a été mis fin à la position de montage, les goujons de verrouillage et de déverouillage (31 et 32) sont maintenus dans les orifices de maintien (29 et 30) par l'intermédiaire de leurs bourrelets de maintien (35 et 36).

3. Transmission à enroulement et à poulies coniques à réglage continu selon la revendication 1, caractérisée par le fait qu'il est prévu, comme éléments de retenue sur la couronne d'appui (17'), des orifices de maintien et d'encliquetage (39, respectivement 40) destinés à des goujons de verrouillage (41) sur la couronne de guidage (19'), et qu'une rondelle élastique fendue (43) s'ouvrant vers l'extérieur est maintenue comme élément de retenue sur le goujon (41) dans une rainure annulaire (42) par un manchon fendu (44), dans une position comprimée radialement, en étant encliquetée à l'état demi-détendu dans l'orifice d'encliquetage (40) pendant que le dispositif à ressorts hélicoïdaux est comprimé, afin de maintenir la pluralité de ressorts hélicoïdaux dans la position de montage à serrage préalable, cependant qu'après qu'il a été mis fin à la position de montage, la rondelle élastique fendue (43) complètement détendue est maintenue dans une partie arrière de l'orifice d'encliquetage (40).

FIG.1

FIG.2

FIG.3

EP 0 341 474 B1

FIG.4

FIG.5

FIG.6

FIG.7

31/32

FIG.8

33    35    37    31

FIG.9

34    36    38    32

FIG.10

FIG.11a

FIG. 11b

FIG.11c